(19) **Europäisches Patentamt**
**European Patent Office**
**Office européen des brevets**

(11) **EP 4 576 495 A1**

(12) **EUROPEAN PATENT APPLICATION**
published in accordance with Art. 153(4) EPC

(43) Date of publication:
**25.06.2025  Bulletin 2025/26**

(51) International Patent Classification (IPC):
*H02J 50/00* (2016.01)    *B60L 53/12* (2019.01)
*H02J 50/12* (2016.01)    *H01F 38/14* (2006.01)

(21) Application number: **23863455.4**

(52) Cooperative Patent Classification (CPC):
**B60L 53/12; H01F 27/30; H01F 38/14; H02J 50/00;
H02J 50/10; H02J 50/12**

(22) Date of filing: **05.09.2023**

(86) International application number:
**PCT/KR2023/013218**

(87) International publication number:
**WO 2024/053983 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.09.2022  KR 20220111839**

(71) Applicants:
• **Hyundai Motor Company**
  **Seoul 06797 (KR)**

• **Kia Corporation**
  **Seoul 06797 (KR)**

(72) Inventors:
• **CHI, Soung Hwan**
  **Hwaseong-si, Gyeonggi-do 18280 (KR)**
• **SEONG, Jae Yong**
  **Hwaseong-si, Gyeonggi-do 18280 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **COIL STRUCTURE FOR TRANSMITTING THREE-PHASE WIRELESS POWER, AND WIRELESS POWER TRANSMISSION DEVICE AND METHOD USING COIL STRUCTURE**

(57)    A coil structure for transmitting three-phase wireless power is disclosed. The coil structure includes: a first coil element which corresponds to a first phase and which is arranged to surround a first area; and a second coil element which corresponds to the first phase and which is arranged to surround a second area adjacent to the first area. The first coil element and the second coil element are connected to the same power source, and the first coil element and the second coil element are branched from a branch point such that the first coil element is arranged to surround the first area and the second coil element is arranged to surround the second area.

FIG. 7

EP 4 576 495 A1

## Description

### TECHNICAL FIELD

The present disclosure relates to a wireless power transmission device/pad and a wireless power reception device/pad for wireless power transfer (WPT) and a wireless power transmission method using the same. More specifically, the present disclosure relates to a coil structure for increasing a power transfer efficiency in the wireless power transfer and a wireless power transmission method using the same.

### BACKGROUND ART

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

Meanwhile, structures of the transmission pad and the reception pad may be critical factors for ensuring a high power transfer efficiency in the magnetic resonance type wireless power transfer system. In particular, in a typical configuration of the transmission pad or the reception pad including a ferrite structure facilitating the wireless power transfer and a coil wound around the ferrite structure, the power transfer efficiency may vary depending on the ferrite structure and/or the coil structure.

Accordingly, there is a need for a core structure that may improve the power transfer efficiency in the wireless power transfer system.

### DISCLOSURE OF INVENTION

### TECHNICAL PROBLEM

In general, a structure and form of a coil used for the wireless power transfer for electric vehicle charging are determined in its size and a number of inductive phases (i.e., single-phase or three-phase) according to a desired charging capacity. In the wireless power transfer system, a ground assembly (GA) system is prepared to match with a vehicle assembly (VA) system, that is, to be compatible with the form and charging capacity of the vehicle assembly system.

A single-loop coil, which is commonly used as a single-phase inductive coil for low-capacity wireless charging, exhibits a high ripple current at a high power level and thus is not suitable for a large-capacity power transfer system.

To solve the above problem, one object of the present disclosure is to provide a novel coil structure applicable to a three-phase inductive wireless power transfer system with high input power and exhibiting low ripple current.

Another object of the present disclosure is to provide a coil structure in which three phase coils corresponding to respective phases are arranged in a stacked configuration and magnetic fields generated by the three phase coils when three-phase input voltages with phase differences of 120 degrees are applied to the three phase coils do not cancel each other and form a large composite magnetic field to ensure an efficient power transfer.

Another object of the present disclosure is to provide a coil structure enhancing phase symmetries in current and magnetic field distribution among coil elements within the three phase coils corresponding to respective phases to form a stable magnetic field distribution.

Another object of the present disclosure is to provide a wireless power transfer (WPT) device and system having an optimized arrangement of a novel magnetic coil structure and exhibiting an enhanced power transfer efficiency.

## TECHNICAL SOLUTION

According to an aspect of an exemplary embodiment to achieve the objects, a coil structure provided for three-phase wireless power transfer (WPT), may include: a first phase coil corresponding to a first phase. The first phase coil includes: a first coil element corresponding to the first phase and arranged to surround a first space; and a second coil element corresponding to the first phase and arranged to surround a second space adjacent to the first space.

The first coil element and the second coil element are connected to a same power source. The first coil element and the second coil element are branched at a branch point, and the first coil element is arranged to surround the first space and the second coil element is arranged to surround the second space.

The coil structure may further include: a second phase coil corresponding to a second phase; and a third phase coil corresponding to a third phase. The first phase coil, the second phase coil, and the third phase coil may be disposed to share a center point and to have angular differences of 120 degrees from each other.

The second phase coil may include two coil elements corresponding to the second phase and arranged to surround respective spaces adjacent to each other.

The third phase coil may include two coil elements corresponding to the third phase, each of which is arranged to surround respective spaces adjacent to each other.

The first coil element and the second coil element in each of the three phase coils may be connected to a same power source through a common port.

The first coil element and the second coil element in each of the three phase coils may share a common feeding line section between the first space and the second space.

The first coil element and the second coil element may be arranged symmetrically with respect to the common feed line section.

A first magnetic field formed in the first space may be in an opposite direction to a second magnetic field formed in the second space.

According to another aspect of an exemplary embodiment, a three-phase wireless power transfer device provided to wirelessly transfer three-phase power to a reception pad including a secondary coil, includes: a first phase coil corresponding to a first phase; a second phase coil corresponding to a second phase; a third phase coil corresponding to a third phase, and a power supply circuit configured to supply power to the first phase coil, the second phase coil, and the third phase coil.

Each of the first phase coil, the second phase coil, and the third phase coil includes: a first coil element corresponding to a respective phase and arranged to surround a first space; and a second coil element corresponding to the respective phase and arranged to surround a second space adjacent to the first space.

In each of the first phase coil, the second phase coil, and the third phase coil, the first coil element and the second coil element are connected to a same power source, and are branched at a branch point and arranged to surround the first space and the second space, respectively.

The first phase coil, the second phase coil, and the third phase coil may be disposed to share a center point and to have angular differences of 120 degrees from each other.

In each of the first phase coil, the second phase coil, and the third phase coil, the first coil element and the second coil element may be connected to a same power source through a common port.

In each of the first phase coil, the second phase coil, and the third phase coil, the first coil element and the second coil element may share a common feeding line section between the first space and the second space and be arranged symmetrically with respect to the common feed line section.

In each of the first phase coil, the second phase coil, and the third phase coil, a first magnetic field formed in the first space may be in an opposite direction to a second magnetic field formed in the second space.

According to another aspect of an exemplary embodiment, a method of wirelessly transferring power from a transmission pad comprising three phase primary coils to a reception pad comprising three phase secondary coils, includes: providing the three phase primary coils, each comprising a first coil element associated with a corresponding phase and arranged to surround a first space and a second coil element associated with the corresponding phase and arranged to surround a second space adjacent to the first space, respectively; positioning a common center point of the three phase secondary coils within a predetermined offset range from a common center point of the three phase primary coils; and supplying three-phase input power to the three phase primary coils and allowing to be wirelessly transferred to the three phase secondary coils.

In providing the three phase primary coils, the first coil element and the second coil element in each of the three phase primary coils may be connected to a same power source. The first coil element and the second coil element may be branched at a branch point and arranged to surround the first space and the second space, respectively.

In providing the three phase primary coils, the first coil element and the second coil element in each of the three phase primary coils may be connected to a same power source through a common port.

In providing the three phase primary coils, the first coil element and the second coil element in each of the three phase primary coils may share a common feeding line section between the first space and the second space and be arranged symmetrically with respect to the common feed line section.

In providing the three phase primary coils, a first magnetic field formed in the first space may be in an opposite direction to a second magnetic field formed in the second space in each of the three phase primary coils.

## ADVANTAGEOUS EFFECTS

According to an exemplary embodiment of the present disclosure, provided is a novel coil structure applicable to a three-phase inductive wireless power transfer system with high input power and exhibiting low ripple current.

In a coil structure according to an exemplary embodiment of the present disclosure, three phase coils corresponding to respective phases are arranged in a stacked configuration. When three-phase input voltages with phase differences of 120 degrees are applied to the three phase coils, the magnetic fields generated by the three phase coils 300 do not cancel each other and form a large composite magnetic field to ensure an efficient power transfer.

According to an exemplary embodiment of the present disclosure, it is possible to implement a coil structure enhancing phase symmetries in the current and the magnetic field distribution among coil elements within the three phase coils corresponding to respective phases and forming a stable magnetic field distribution.

According to an exemplary embodiment of the present disclosure, provided is a wireless power transfer (WPT) device and system having an optimized arrangement of the novel magnetic coil structure and exhibiting an enhanced power transfer efficiency.

## DESCRIPTION OF DRAWINGS

FIG. 1 is an illustration of a wireless power transfer system to which an exemplary embodiment of the present disclosure is applicable;

FIG. 2 is a circuit diagram of an equivalent circuit of an electric vehicle wireless charging circuit according to an exemplary embodiment of the present disclosure;

FIG. 3 shows an equivalent circuit of a single-phase to single-phase wireless power transfer (WPT) system according to an exemplary embodiment of the present disclosure;

FIG. 4 is a conceptual cross-sectional view and an elevation view of a transmission pad according to an exemplary embodiment of the present disclosure;

FIG. 5 shows an equivalent circuit of a three-phase to three-phase WPT system according to an exemplary embodiment of the present disclosure;

FIG. 6 is a conceptual diagram illustrating a coil structure for three-phase wireless power transfer according to an exemplary embodiment of the present invention;

FIG. 7 is a circuit diagram illustrating an equivalent circuit of the coil structure of FIG. 6;

FIG. 8 is a flowchart conceptually illustrating a wireless power transfer method according to another exemplary embodiment of the present disclosure; and

FIG. 9 is a block diagram illustrating a generalized configuration of hardware included in the wireless power transmission pad and/or the wireless power reception pad or associated with the wireless power transmission pad and/or the wireless power reception pad to control a sequence for the wireless power transfer.

## BEST MODE

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": A device providing the contactless coupling to the secondary device. In other words, the primary device may be a device external to an EV. When the EV is receiving power, the primary device may operate as the source of the power to be transferred. The primary device may include the housing and all covers.

"Secondary device": A device mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmission coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

The electric vehicle charging system may include a conductive charging system using a cable or a non-contact wireless power transfer system, but is not limited thereto. The electric vehicle charging system may be defined as a system that charges the battery mounted in the electric vehicle using electric power obtained from a commercial power grid or stored in an energy storage device and may have various forms depending on a type of the electric vehicle.

SAE TIR J2954 standard, which is one of the most representative industrial standards for wireless charging, establishes industry-standard specification guidelines that define acceptable criteria for interoperability, electromagnetic compatibility, minimum performance, safety and testing for wireless charging of light-duty electric and plug-in electric vehicles.

As an example of the wireless charging system, the wireless charging system (WCS) according to the J2954 standard may include a grid interface, a high frequency power inverter, power transfer coils, a filter, a rectifier, an optional regulator, and communication circuits between the vehicle energy charging/storage system and a grid connected power inverter. The grid interface may be similar to a conventional EVSE connection for single or three-phase AC power.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

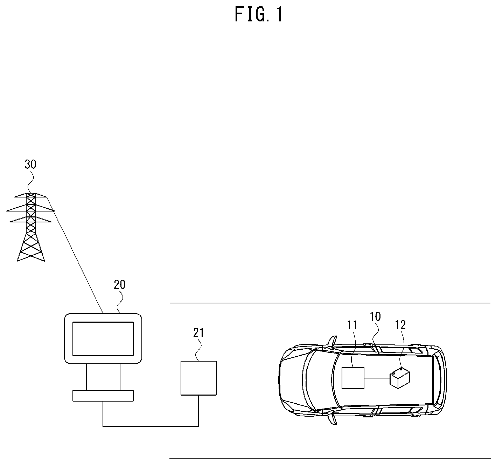

FIG. 1 is an illustration of a wireless power transfer system to which an exemplary embodiment of the present disclosure may be applied.

As shown in FIG. 1, the wireless power transfer may be performed by at least one component of an electric vehicle (EV) 10 and a charging station 20 and may be used for transferring electric power to the EV 10 without any conductive wiring.

The EV 10 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 10 may generally be defined as a vehicle that supplies an electric power derived from a rechargeable energy storage such as a battery 12 to an electric motor in a power train system of the EV 10.

The EV 10 may include a power reception pad 11 having a reception coil suitable for receiving the electric power for charging the battery 12 by the wireless power transfer and may include a plug receptacle or inlet suitable for receiving the electric power for charging the battery 12 by the conductive charging. In particular, the EV 10 configured for conductively charging the battery 12 may be referred to as the plug-in electric vehicle (PEV).

The charging station 20 may be connected to the power grid 30 or a power backbone, and may provide the AC power received from the power grid 30 or the power backbone to a power transmission pad 21 having a transmission coil through a power link.

The charging station 20 may communicate with the power grid 30, or an infrastructure management system or an infrastructure server managing the power grid, and may be configured to perform wireless communications with the EV 10. The wireless communications may be performed through Bluetooth, Zigbee, cellular, wireless local area network (WLAN), or the like.

The charging station 20 may be located at various places including a parking area of the owner's house of the EV 10, a parking lot for charging the EV at a gas station, a parking lot at a shopping center or a workplace, or the like, but is not limited thereto.

The wireless power transfer to the battery 12 of the EV 10 may be performed as follows. First, the power reception pad 11 of the EV 10 is disposed in an energy field over the power transmission pad 21. Then the reception coil in the power reception pad 11 and the transmission coil in the power transmission pad 21 may be coupled to and interact each other. An electromotive force may be induced in the power reception pad 11 as a result of the coupling or the interaction, and the battery 12 may be charged by the induced electromotive force.

The charging station 20 and the power transmission pad 21 as a whole or in part may be referred to as the supply power circuit (SPC) or the ground assembly (GA), of which meaning and function were defined above.

Also, the power reception pad 11 along with all or some of the other internal components of the EV 10 may be referred to as the EV power circuit (EVPC) or the vehicle assembly (VA), of which meaning and function were defined above.

Here, each of the power transmission pad 21 and the power reception pad 11 may be configured as a non-polarized or polarized pad.

The non-polarized pad may have one pole in a center of the pad and an opposite pole around its periphery. In this case, the magnetic flux may be formed to exit from the pole in the center of the pad and return to the pole in the periphery from outside of the pad.

The polarized pad may have two poles arranged symmetrically at opposite positions on the pad. In this case, the magnetic flux may be formed according to the orientation of the pad.

In the present specification, the power transmission pad 21 and the power reception pad 11 may be collectively referred to as wireless charging pads.

In an exemplary embodiment of the present disclosure, Y-axis of a Cartesian coordinate system may be set to point to the front or rear of the vehicle, X-axis may be set to point to the right or left of the vehicle, and Z-axis may be set to point to the upward or downward direction. The magnetic center of a coil of the power transmission pad 21 or the power reception pad 11 may be defined as x=0 and y=0, and a ground surface may be defined as z=0.

In another exemplary embodiment of the present disclosure, the X-axis may be set to point to the front or rear of the vehicle, and the Y-axis may be set to point to the right or left of the vehicle.

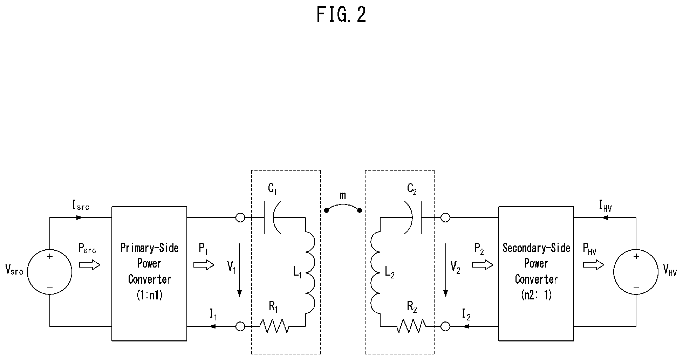

FIG. 2 is a circuit diagram of an equivalent circuit of an electric vehicle wireless charging circuit according to an exemplary embodiment of the present disclosure.

A left portion of the circuit shown in FIG. 2 may be interpreted as a representation of all or part of a power supply Vsrc supplied from the power grid and a charging station 20 including the power transmission pad 21, and a right portion of the circuit shown in FIG. 2 may be interpreted as a representation of all or part of the electric vehicle including the power reception pad and the battery.

The left portion of the circuit shown in FIG. 2 may provide an output power Psrc corresponding to the power source Vsrc supplied from the power grid to a primary-side power converter. The primary-side power converter may perform a frequency-conversion and AC-DC or DC-to-AC conversion of the power Psrc to output a converted output power P1 to a transmission coil L1, so that the transmission coil L1 may generate an electromagnetic field at a desired operating frequency.

The primary-side power converter may include an AC-DC converter configured to convert the power Psrc which is an AC power supplied from the power grid into a DC power and a low-frequency (LF) converter configured to convert the DC power into an AC power having an operating frequency suitable for the wireless charging. For example, the operating frequency for the wireless charging may be determined to be in a frequency range 80-90 kHz, but is not limited thereto.

The power P1 output by the primary-side power converter may be supplied to a circuit including the transmission coil L1, a first capacitor C1, and a first resistor R1. In particular, a capacitance of the first capacitor C1 may be determined as a value establishing the operating frequency suitable for the wireless charging together with the transmission coil L1. The first resistor R1 may represent a power loss in the transmission coil L1 and the first capacitor C1.

Further, the transmission coil L1 may be electromagnetically coupled with a reception coil L2 by a coupling coefficient m so that a power P2 is transferred to the reception coil L2 or the power P2 is induced in the reception coil L2. Therefore, the meaning of power transfer in the present disclosure may be used interchangeably with the meaning of power induction.

The power P2 induced in or transferred to the reception coil L2 may be provided to a secondary-side power converter. Particularly, a capacitance of a second capacitor C2 may be determined as a value establishing the operating frequency suitable for the wireless charging together with the reception coil L2. A second resistor R2 may represent a power loss in the reception coil L2 and the second capacitor C2.

The secondary-side power converter may include an AC-DC converter configured to convert the supplied power P2 of the operating frequency to a DC power having a voltage level suitable for the battery VHV of the EV.

The electric power PHV converted from the power P2 supplied to the secondary-side power converter may be used for charging the battery VHV mounted inside the EV.

The right portion of the circuit shown in FIG. 2 may further include a switch for selectively connecting or disconnecting the reception coil L2 with the battery VHV.

Resonance frequencies of the transmission coil L1 and the reception coil L2 may be similar or identical to each other, and the reception coil L2 may be positioned in the electromagnetic field generated by the transmission coil L1.

It should be noted that the circuit of FIG. 2 is illustrative for the WPT in the EV WPT system used for exemplary embodiments of the present disclosure, and the present disclosure is not limited to the circuit illustrated in FIG. 2.

On the other hand, since the power loss may increase with a distance between the transmission coil L1 and the reception coil L2, it may be an important factor to set the relative positions of the transmission coil L1 and the reception coil L2 appropriately.

The transmission coil L1 may be included in the transmission pad 21 shown in FIG. 1, and the reception coil L2 may be included in the reception pad 11 shown in FIG. 1. Additionally, the transmission coil may be referred to as the primary coil or a ground assembly (GA) coil, and the reception coil may be referred to as the secondary coil or a vehicle assembly (VA) coil. Therefore, a positional alignment between the transmission pad and the reception pad or a positional alignment between the EV and the transmission pad may be an important factor also.

The positional alignment between the transmission pad 21 and the reception pad 11 in the electric vehicle 10 shown in FIG. 1 may correspond to the term "alignment" described above and therefore may be defined as the positional alignment between the SPC/GA and the EVPC/VA and is not limited to the positional alignment of the transmission pad 21 and the reception pad 11.

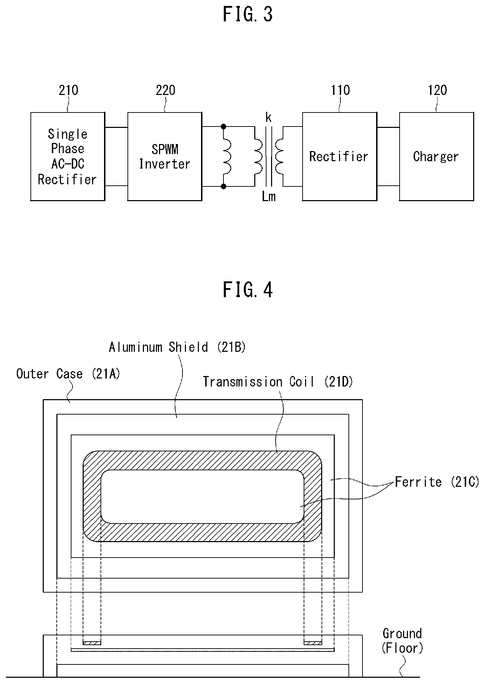

The transmission pad 21 may be positioned below the ground surface, may be positioned on the ground surface, or may be positioned below the ground surface with its top surface being exposed over the ground surface. At this time, as shown in FIGS. 2 and 3, the x-axis may indicate the front-to-back direction of the vehicle, the y-axis may indicate the left-right direction of the vehicle, and the z-axis may indicate the up-and-down direction of the vehicle.

In addition, the reception pad 11 of the EV may be defined by different categories according to its height (defined in the z-direction) measured from the ground surface. For example, the reception pad 11 having a height of about 100-150 millimeters (mm) from the ground surface may be categorized into a class 1. The reception pad 11 having a height of about 140-210 mm may be categorized into a class 2. The reception pad 11 having a height of about 170-250 mm may be categorized into a class 3. The reception pad may support only some of the classes 1 through 3. For example, only the class 1 may be supported by the reception pad 11, or the class 1 and 2 may be supported by the reception pad 11.

The height of the reception pad measured from the ground surface may correspond to the previously defined term "vehicle magnetic ground clearance."

Meanwhile, a vertical position (i.e., position in the z-direction) of the power transmission pad 21 may be determined to be disposed between the maximum class and the minimum class supported by the power reception pad 11. For example, in case that the reception pad supports only the class 1 and 2, the vertical position of the power transmission pad 21 may be in a range between about 100 and 210 mm with respect to the power reception pad 11.

In addition, a gap between the center of the power transmission pad 21 and the center of the power reception pad 11 may be determined to be disposed within the limits of the horizontal and vertical directions (defined in the x- and y-directions). For example, the gap (e.g., $\Delta y$) may be determined to be within $\pm 75$ mm in a lateral direction (defined in the y-direction), and within $\pm 100$ mm in the longitudinal direction (defined in the x-direction).

The relative positions of the power transmission pad 21 and the power reception pad 11 may be varied in accordance with experimental results, and it should be noted that the numerical values mentioned above are provided as examples.

Although the alignment between the pads has been described above on the assumption that each of the transmission pad 21 and the reception pad 11 includes a coil, the alignment between the pads may be defined more specifically by an alignment between the transmission coil (or GA coil) and the reception coil (or VA coil) included in the transmission pad 21 and the reception pad 11, respectively.

FIG. 3 shows an equivalent circuit of a single-phase to single-phase wireless power transfer (WPT) system according to an exemplary embodiment of the present disclosure.

A magnetic/inductive coupling or resonance structure formed between the primary coil and the secondary coil according to various embodiments of the present disclosure may be represented equivalently by a transformer shown in FIG. 3.

Referring to FIG. 3, a single-phase rectifier 210 and a sinusoidal pulse width modulation (SPWM) inverter 220 for applying an alternating current power to the primary coil may be disposed on a side of the primary coil.

In addition, a rectifier 110 and a charger 120 for transferring the power from the secondary coil to the load or battery may be disposed on a side of the secondary coil.

The wireless power transfer system according to an exemplary embodiment of the present disclosure may include a power transfer circuit. The power transfer circuit shown in FIG. 3 may include a structure comprised of the single-phase rectifier 210 and the SPWM inverter 220 on the primary coil side as a technical feature.

The power transfer circuit according to an exemplary embodiment of the present disclosure shown in FIG. 3 may employ a proportional integral (PI) control scheme based on a measurement on the single-phase rectifier 210, as a technical feature, to control the single-phase rectifier 210 and the SPWM inverter 220 applying an alternating current power to the primary coil.

The SPWM inverter 220 may receive an output of the single-phase rectifier 210 and generate the alternating current power to supply the alternating current power as an output to the primary coil.

Meanwhile, an alternating current power rectified by the rectifier 110 may be supplied to the battery by the charger 120 to recharge the battery.

FIG. 4 is a conceptual cross-sectional view and an elevation view of a conventional power transmission pad which may be a comparative example of the present disclosure.

FIG. 4 shows a transmission coil 21D that may be included in the transmission pad 21 in a device performing the wireless power transfer by a single-phase operation, for example, in the device shown in FIG. 3. The transmission pad 21 shown in FIG. 4 may support the single-phase operation mode. If the reception pad 11 includes the reception coil (not shown) having a shape corresponding to the transmission coil of FIG. 4, the reception pad 11 can perform the wireless power reception in the single-phase operation mode. The configuration of the coil and hardware of the reception pad 11 needed for the single-phase operation mode may be easily implemented by a person skilled in the art by modifying the transmission pad of FIG. 4, and detailed description thereof is omitted for simplicity.

Referring to FIG. 4, the power transmission pad 21 may include an outer case 21A forming an outer structure of the power transmission pad 21, an aluminum shield 21B having a shape of a planar plate and installed inside the outer case 21A, and a ferrite pad 21C installed on or above the aluminum shield 21B, and a transmission coil 21D installed on or above ferrite pad 21C. Here, "on or above" means an upward direction relative to the ground where the power transmission pad 21 is installed.

Here, the ferrite which is used for the ferrite pad 21C is a magnetic material containing iron oxide and can affect the wireless power transfer by reducing a magnetic resistance and facilitating a flow of magnetic flux.

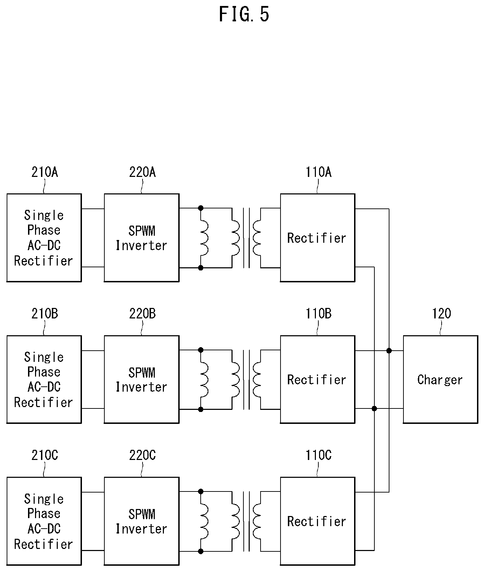

FIG. 5 shows an equivalent circuit of a three-phase to three-phase WPT system according to an exemplary embodiment of the present disclosure.

Referring to FIG. 5, each of the primary coil and the secondary coil may be implemented by a three-phase coil, and the WPT system may include, for each phase, a single-phase rectifier 210A-210C and a SPWM inverter 220A-220C for applying an AC power to the primary coil.

In addition, a rectifier 110A-110C may be disposed on the side of the secondary coil for each phase to transfer the power from the secondary coil to the load or battery through the charger 120.

The configuration of the single-phase rectifiers 210A-210C, the SPWM inverters 220A-220C, and the rectifiers 110A-110C shown in FIG. 5 may be easily implemented by a person skilled in the art based on the single-phase rectifier 210, the SPWM inverter 220, and the rectifier 110 shown in FIG. 3, and detailed description thereof is omitted for simplicity.

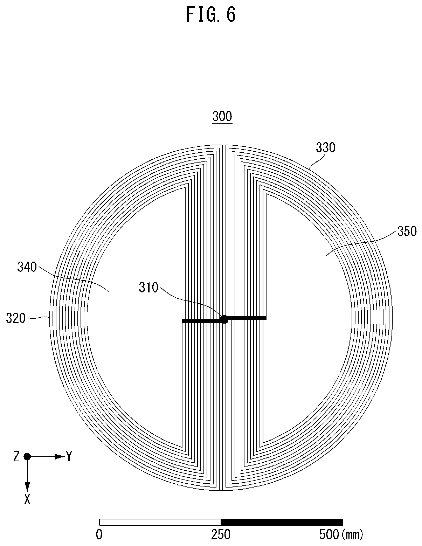

FIG. 6 is a conceptual diagram illustrating a coil structure for three-phase wireless power transfer according to an exemplary embodiment of the present disclosure.

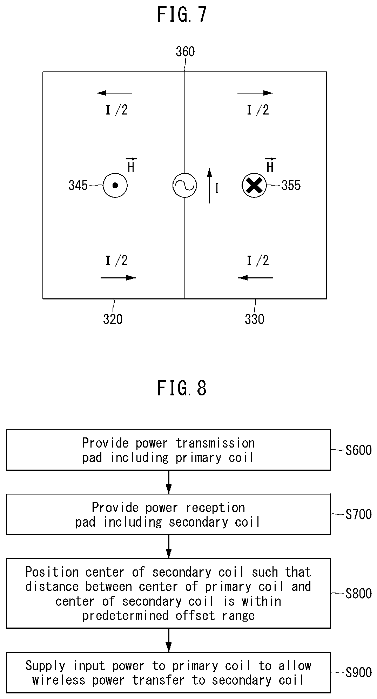

FIG. 7 is a circuit diagram illustrating an equivalent circuit of the coil structure of FIG. 6.

Referring to FIGS. 6 and 7, the coil structure for three-phase wireless power transfer according to an exemplary embodiment of the present disclosure includes a first phase coil 300 corresponding to a first phase. The first phase coil 300 may include a first coil element 320 corresponding to the first phase and arranged to surround a first space 340 and a second coil element 330 corresponding to the first phase and arranged to surround a second space 350 adjacent to the first space 340.

The first coil element 320 and the second coil element 330 are connected to a same power source. The first coil element 320 and the second coil element 330 are branched at a branch node 360, and the first coil element 320 surrounds the first space 340 and the second coil element 330 surrounds the second space 350.

The coil structure for three-phase wireless power transfer according to an exemplary embodiment of the present disclosure further includes a second phase coil 300 corresponding to a second phase and a third phase coil 300 corresponding to a third phase. The first phase coil 300, the second phase coil 300, and the third phase coil 300 may share a center point 310 and may be arranged to have angular differences of 120 degrees from each other so as to correspond to the three-phase input power.

The three phase coils 300 may have the same structure and equivalent circuit as that shown in FIGS. 6 and 7, respectively. That is, the second phase coil 300 corresponds to the second phase and may include two coil elements 320 and 330 arranged to surround adjacent spaces 340 and 350, respectively, distinct from each other.

The third phase coil 300 corresponds to the third phase and may include two coil elements 320 and 330 arranged to surround adjacent spaces 340 and 350, respectively, distinct from each other.

The first coil element 320 and the second coil element 330 in each phase coil 300 may be connected to the same power source through a common port.

The first coil element 320 and the second coil element 330 in each phase coil 300 may share a common feeding line section between the first space 340 and the second space 350.

The first coil element 320 and the second coil element 330 may be arranged symmetrically with respect to the common feeding line section.

A first magnetic field 345 generated in the first space 340 may be in an opposite direction to a second magnetic field 355 generated in the second space 350.

The three-phase wireless power transfer device prepared to wirelessly transmit the three-phase power to the reception pad including the secondary coil according to an exemplary embodiment of the present disclosure includes the first phase coil 300 corresponding to the first phase, the second phase coil 300 corresponding to the second phase, the third phase coil 300 corresponding to the third phase, and a power supply circuit supplying power to the first phase coil 300, the second phase coil 300, and the third phase coil 300.

The three phase coils 300 and the power supply circuit may correspond to the primary side circuit of the three-phase to three-phase WPT system shown in FIG. 5. That is, the rectifiers 210A-210C and the inverters 220A-220C supplying input AC power to the three primary coils having the structure of phase coils 300 described above may be included in the power supply circuit of the primary side. Similarly, the rectifiers 110A-110C connected to the three secondary coils having the structure of the phase coils 300 and the charger 120 charging the battery by induced power may be included in the power reception and charging circuit of the secondary side.

Each of the first phase coil 300, the second phase coil 300, and the third phase coil 300 may include the first coil element 320 corresponding to the phase and arranged to surround the first space 340 and the second coil element 330 corresponding to the phase and arranged to surround the second space 350 adjacent to the first space 340. Such a configuration of the phase coils may be applied commonly to the primary coils and the secondary coils.

In each of the first phase coil 300, the second phase coil 300, and the third phase coil 300, the first coil element 320 and the second coil element 330 are connected to the same power source as each other. In addition, the first coil element 320 and the second coil element 330 are branched at the branch node 360 so that the first coil element 320 surrounds the first space 340 and the second coil element 330 surrounds the second space 350. Such a configuration may also be applied commonly to the primary coils and the secondary coils.

The first phase coil 300, the second phase coil 300, and the third phase coil 300 may be disposed to share the center point 310 and to have angular differences of 120 degrees from each other. This configuration may also be applied commonly to the primary coils and the secondary coils.

In each of the first phase coil 300, the second phase coil 300, and the third phase coil 300, the first coil element 320 and the second coil element 330 may be connected to the same power source through a common port. This configuration may also be applied commonly to the primary coils and the secondary coils.

In each of the first phase coil 300, the second phase coil 300, and the third phase coil 300, the first coil element 320 and the second coil element 330 may share a common feeding line section between the first space 340 and the second space 350 and be arranged symmetrically with respect to the common feed line section. This configuration may also be applied commonly to the primary coils and the secondary coils.

In each of the first phase coil 300, the second phase coil 300, and the third phase coil 300, the first magnetic field 345 generated in the first space 340 may be in an opposite direction to the second magnetic field 355 generated in the second space 350. This configuration may also be applied commonly to the primary coils and the secondary coils.

That is, in an exemplary embodiment in which both the primary coil and the secondary coil adopt the coil structure of the present disclosure, the common center point of the primary coil and the common center point of the secondary coil may be are arranged to be shared on one central axis, so that the power transfer efficiency may be increased.

According to another embodiment of the present disclosure, the common center point of the phase coils in the primary coil (i.e., center of the primary coil) and the common center point of the phase coils in the secondary coil (i.e., center of the secondary coil) do not necessarily have to coincide horizontally with the same XY coordinates. Even if the XY coordinates of the center of the primary coil and the center of the secondary coil do not coincide with each other, electric power may be wirelessly transferred from the primary coil to the secondary coil. Nonetheless, however, it is desirable that the center of the secondary coil is aligned with the center of the primary coil since a serious misalignment of the center of the primary coil and the center of the secondary coil may significantly reduce the efficiency of the wireless power transfer.

In addition, it may be desirable that differences in the XY coordinates between the center of the primary coil and the center of the secondary coil is smaller than a predetermined reference value to ensure a desired efficiency of the wireless power transfer.

According to the wireless power transfer, energy is transferred using RF signals, lasers, sound waves, and so on instead of transferring the electric energy through conductive wires.

The inductive wireless power transfer is a kind of wireless power transfer technologies for transferring the energy through magnetic induction occurring between coils and is suitable for transferring high electric power to charge a large-capacity battery in an electric vehicle, for example.

An inductive wireless power transfer system includes a transmission coil (i.e., primary coil) and a reception coil (i.e., secondary coil), and a matching circuit may be incorporated to resonate the transmission coil and the reception coil at the same frequency and increase a power transfer efficiency.

Generally, the single-phase inductive wireless power transfer is implemented using loop coils and may provide an efficient charging method in a low-capacity wireless charging system. However, the loop coils may not be suitable for a large-capacity power transfer system because of a high ripple current at a high power level.

Power class for the magnetic field wireless power transfer (MF WPT) for the electric vehicle charging are classified, based on a maximum input power at a transmitter side, into class 1 (WPT1) through class 4 (WPT 4) and the maximum input power may range from 1 to 22 kilowatts (kW).

For the wireless power transfer system in which the maximum input power exceeds 11 kW, the power capacity of the single-phase inductive wireless power transfer scheme is surpassed, which necessitates a use of a coil array coil operating in a multi-channel scheme for the large-capacity power transfer system of which maximum input power exceeds 11 kW.

It may be envisaged to implement a high power inductive wireless power transfer system by connecting three single-phase systems each of which may include multiple loop coils, but an integration and control of such a configuration in a single device is a complex task and there may still remain the high ripple current.

The present disclosure provides a novel coil structure applicable to a three-phase inductive wireless power transfer system with high input power and exhibiting low ripple current.

According to an exemplary embodiment of the present disclosure, the three phase coils 300 are arranged a stacked configuration, such that, when three-phase input voltages with phase differences of 120 degrees are applied to the three phase coils 300, the magnetic fields generated by the three phase coils 300 do not cancel each other and form a large composite magnetic field to ensure an efficient power transfer.

The three-phase wireless power system including the proposed coil structure according to an exemplary embodiment of the present disclosure enables to achieve the large-capacity power transfer exceeding 11 kW more safely and efficiently.

Each of the transmission coil (i.e., primary coil) connected to the transmission circuit and the reception coil (i.e., secondary coil) mounted on the vehicle are connected to a compensation network including a matching circuit and have a magnetic resonance structure at a specific frequency to implement the wireless power transfer of a resonant inductive coupling scheme that transfers the power with a high efficiency.

The current applied to each phase coil of the three-phase coils according to the present disclosure is divided and proceeds to two spiral coil elements connected in parallel, and combined again at a single node after passing through respective conductors wound with multiple turns. The currents may generate magnetic fields parallel to a plane where the coil arranged at the points located near the common feeding line.

Referring to FIG. 7, as the magnetic flux formed by the magnetic field 345 of the first space 340 and the magnetic flux formed by the magnetic field 355 of the second space 350 are combined, a magnetic field parallel to a plane in which the coils are disposed is formed (i.e., a coil plane) in the space above the common feeding line of the coil elements, flowing from the first space 340 to the second space 350.

Each of the phase coils according to an exemplary embodiment of the present disclosure has a structure that two coil elements are wound with multiple turns from the common feeding line and are connected in parallel. The current flowing in a conductor shared by the two coil elements is divided at the branch point 360 and flows through the two coil elements.

The currents flowing through the two coil elements in the opposite direction with respect to the common feeding line may generate magnetic fields in a direction perpendicular to the coil plane in the first and second spaces, but the directions of the magnetic fields generated by the currents in the two coil elements are opposite to each other. Meanwhile, the magnetic fields generated by the currents in the two coil elements in the space above the parallel sections of the coil elements are parallel to the coil plane.

Since the three phase coils are arranged in the stacked configuration with a 120-degree difference in space, when sinusoidal AC currents with the phase differences of 120 degrees are applied to the three phase coils, the magnetic fields generated by the three phase coils may be added to form a composite magnetic field rotating with a uniform amplitude over time with respect to the coil center axis.

The intensities of X-axis components of the magnetic fields generated by the three phase coils may be expressed by Equation 1. Here, the phase difference $\theta_2$ and $\theta_3$ are 120 degrees, and $H_1$, $H_2$, and $H_3$ are maximum magnitudes of the magnetic fields generated by each of the phase coils.

[Equation 1]

$$H_{1x} = H_1 \sin \omega t \cos 0 = H_1 \sin \omega t$$

$$H_{2x} = H_2 \sin (\omega t + 2\pi/3) \cos \theta_2 = H_2 \sin (\omega t + 2\pi/3) \cos (2\pi/3)$$

$$= -(1/2)H_2 \, (-(1/2)\sin \omega t + (\sqrt{3}/2) \cos \omega t)$$

$$H_{3x} = H_3 \sin (\omega t + 4\pi/3) \cos (4\pi/3)$$

$$= -(1/2)H_2 \, (-(1/2)\sin \omega t - (\sqrt{3}/2) \cos \omega t)$$

Rearranging Equation 1 under an assumption that a balancing among the three phases is maintained, a sum of the X-axis components of the magnetic fields generated by the three phase coils may be expressed by Equation 2.

[Equation 2]

$$H_x = H_{1x} + H_{2x} + H_{3x} \, ( \text{ if } H_0 = H_1 = H_2 = H_3)$$

$$= (3/2) \, H_0 \sin \omega t$$

Similarly, the intensities of Y-axis components of the magnetic fields generated by the three phase coils may be expressed by Equation 3.

[Equation 3]

$$H_{1y} = H_1 \sin \omega t \sin 0 = 0$$

$$H_{2y} = H_2 \sin (\omega t + 2\pi/3) \sin (2\pi/3)$$

$$= (\sqrt{3}/2)H_2 \, (-(1/2)\sin \omega t + (\sqrt{3}/2) \cos \omega t)$$

$$H_{3y} = H_3 \sin (\omega t + 4\pi/3) \sin (4\pi/3)$$

$$= -(\sqrt{3}/2)H_2 \, (-(1/2)\sin \omega t - (\sqrt{3}/2) \cos \omega t)$$

Rearranging Equation 3 under an assumption that the balancing among the three phases is maintained, a sum of the Y-axis components of the magnetic fields generated by the three phase coils may be expressed by Equation 4.

[Equation 4]

$$H_y = H_{1y} + H_{2y} + H_{3y}$$

$$= (3/2) \, H_0 \cos \omega t ( \text{ if } H_0 = H_1 = H_2 = H_3)$$

Combining Equations 2 and 4, the intensity of the composite magnetic field may be expressed by Equation 5.

[Equation 5]

$$H = \sqrt{H_x^2 + H_y^2}$$
$$= \frac{3}{2} H_0 \sqrt{\sin^2 \omega t + \cos^2 \omega t}$$
$$= \frac{3}{2} H_0$$

It can be seen, in Equation 5, that the composite magnetic field exhibits a pattern that the magnitude of the field is maintained without a change over time but a horizontal direction of a peak rotates around the coil center axis.

The intensity of the composite magnetic field is 1.5 times the magnetic field intensity H0 generated by the single-phase coil.

An exemplary embodiment of the present disclosure enables to implement a coil structure enhancing phase symmetries in the current and the magnetic field distribution among the coil elements within the three phase coils corresponding to respective phases and forming a stable magnetic field distribution.

The coil structure according to an exemplary embodiment of the present disclosure allows to achieve advantageous performance, especially in a high-frequency band. If an 8-shaped coil for each of the phase coils is implemented by combining conventional coils, the power transfer efficiency may be low since the magnetic fields may fluctuate over time and phase even if the same currents i(t1, p1) and i(t2, p2) are supplied in the first space and the second space through a common feeding line.

According to an exemplary embodiment of the present disclosure, the phase symmetries may be enhanced so that a resultant magnetic field has the magnitude maintained constant without a change over time and has a peak rotating around the coil center axis.

An exemplary embodiment of the present disclosure enables to implement a wireless power transfer (WPT) device and system having an optimized arrangement of the novel magnetic coil structure and exhibiting an enhanced power transfer efficiency. An optimization of the matching circuit to minimize an interference may enable to enhance the power transfer efficiency further. In In addition, an optimization of the coil structure and a magnetic core structure may further increase the efficiency.

In the exemplary embodiments shown in FIGS. 6 and 7, the coils and may be may be implemented by flat wires. Each of the coils may be formed with the flat wire wound at least once.

Alternatively, the coils or the coil elements in the exemplary embodiments shown in FIGS. 6 and 7 may be implemented by litz wires. Each of the coils may be formed with the litz wire wound at least once.

Compared with a regular copper wire, the litz wire is advantageous in that the current flow does not become unstable with the increase in the current, losses are small so that a stable current flow may be maintained, and the temperature of the coil rises less. Therefore, the litz wire is an appropriate material for the electric vehicle wireless power transfer system using an operating frequency of 79 to 90 kHz. Generally, the price of the litz wire is set at a price per meter. There are attempts to use the litz wire in the electric vehicle wireless power transfer system taking such characteristics of the litz wire into account.

However, the wireless power transfer system for the light-duty electric vehicle requires the litz wire with a large current capacity (e.g., at least 50A or larger), which is dozens of times more expensive than a general litz wire and may cause an increase in the manufacturing cost of the electric vehicle.

Because the electric vehicle wireless charging system transfers large amounts of electric power wirelessly, strict heat management is always important. In addition, it is important to manage the heating of foreign objects such as metal.

However, due to the structure of the litz wire in which inner strands are surrounded by outer strands, it may be difficult to quickly discharge the generated heat to the outside of the litz wire. In addition, as the heat generation continues, the current loss in the litz wire increases. Therefore, it may be difficult to use the litz wire for a long period of time. As a result, the power transfer system using the litz wire needs a cooling arrangement, which increases the cost further.

Even if a cooling arrangement is added to the system, a thermal conductivity of the litz wire may be too low to quickly discharge the generated heat to the outside of the litz wire, and thus an overall cooling efficiency may be still low.

In addition, there may be some views to be considered that a supporting structure maintaining a shape of the coil made of the litz wire may impair the safety of the system.

Although the litz wire has a strength higher than the regular copper wire and facilitates to maintain a shape of the wire, the litz wire is linear-shaped, and a coil made of the litz wire may need a frame to maintain the shape of the litz wire and the coil. Such a frame is made of a dielectric with a low dielectric constant to reduce an electromagnetic influence on the operation of the coil. The dielectric with a low dielectric constant is generally vulnerable to heat, and thus is inadequate to use for a high-power charging at 22 Kilowatts (KW), for example, which generates a lot of heat. Additionally, because the frame is in contact with the litz wire, the frame may hinder a heat exchange, undergo a change in its shape during repeated heating and cooling processes, or cause a fire.

Therefore, the present disclosure provides an alternative example in addition to the example using the litz wire. The wireless power transmission pad or the power reception pad according to an embodiment of the present disclosure may be implemented using a flat wire.

The flat and rectangular wire according to an exemplary embodiment of the present disclosure may be a modification of a commercially available flat wire to adapt to the purpose of the present disclosure.

Flat wires available on the market generally have corners that are almost right-angled. These commercially available flat wires are used to increase a space factor. A wire according to an alternative example of the present disclosure maintains its flat shape has corners that are at least partially rounded.

The wire proposed by the present disclosure has characteristics of 1) having a flat or planar shape, and 2) having sides that are partially round and/or partially rectangular. The wire according to the example of the present disclosure having such characteristics, in a state of being wound in a coil, may be a flat wire having a shape optimized to generate an electromagnetic field suitable for the wireless power transfer.

Flat and rectangular wires may be available in various sizes, for example, single or multiple strands (e.g., eight strands), thickness ranges of 1.0-1.9 millimeters (mm), and widths ranges of 3-20 mm. In addition, the rectangular wire can be wound into a coil of a continuously transposed conductor (CTC) form.

The advantage of the coil made of such a wire is that it can be used for a high voltage application, and the conductor adhesion of insulating material to the conductor is excellent enough to select and use one of diverse insulating materials such as KRAFT, THERMAL UPGRADE KRAFT, NOMEX, DENNISON, KAPTON, MICA, and CONDUCTOFOL.

If an insulation issue is solved in this way, the number of turns may be increased compared to the existing the litz wire coil, and an increase in the number of turns may enable to establish an increased magnetic flux and enhance a power transfer efficiency.

In addition, because it is essentially a single cylindrical metal structure when observed from outside, heat may be transferred quickly from the inside to the outside without any discontinuities.

Further, the litz wire has a structure that inner strands are surrounded by outer strands as mentioned above. Thus, when an internal short circuit or insulation deformation or deterioration occurs, it may be difficult to identify a location of a trouble, and partial maintenance of the wire may be impossible and the entire coil has to be replaced, which leads to an increase in maintenance costs. However, the coil structure employing the flat wire or the planar wire proposed in the present disclosure is more durable than the litz wire, and thus the troubles such as the short circuit in the wire are less likely to occur. Further, even if a trouble occurs, the location where the trouble occurred may be identified easily. Therefore, it may be possible to immediately fix the trouble, and even if the coil itself is replaced, the replacement cost is low. As a consequence, the coil structure according to the present disclosure requires much less resources for the maintenance.

In addition, the use of the flat wire structure has the advantage of a high heat transfer efficiency as well as a high freedom of arrangement, which enables to selectively apply various cooling techniques such as dry self-cooling, dry wind cooling, dry sealed self-cooling, inflow self-cooling, inflow wind cooling, oil-flowing water cooling, oil-flowing wind cooling, and refrigerant cooling. Since various cooling techniques may be applied selectively or in combination, embodiment(s) of the present disclosure can have a very advantageous effect in cooling the heat generated during the power transfer.

The flat wire according to an exemplary embodiment of the present disclosure may be implemented using at least one material selected from copper and copper alloy, but the scope of the present disclosure is not limited thereto, and various conductors may be used for the flat wire as well.

Meanwhile, it may be advantageous for establishing an electromagnetic field near the coils to round the corners of the coil at least partially. A curvature at which the corners are rounded may also be determined taking into account the power transfer efficiency, the shape of the coil, and so on.

In an example, the coil structure according to an exemplary embodiment of the present disclosure may be implemented, based on a shape and material of a bus bar forming a conductor connected to the battery inside the electric vehicle 10, by determining an aspect ratio of a cross section of the wire and a numerical range of a curvature of the rounded corner.

Comparing the example employing the litz wire with the alternative example, although the litz wire is a technology designed to increase the ratio of surface area i.e., current path, to the cross sectional area or volume, interferences between the strands of the litz wire in a central space of the litz wire bundles where the strands are dense may reduce the power transfer efficiency and increase the generation of heat.

Since the current flows through a surface of the conductor, the ratio of the surface area to the cross sectional area may be understood to correspond to the ratio of the current path to the total volume.

Examples of the present disclosure may increase the ratio of the surface area to the cross sectional area and improve the space factor by proposing the coil structure using the flat wire, thereby improving the power transfer efficiency.

The rounded corners may contribute to the formation of electromagnetic fields, resulting in more advantageous electromagnetic characteristics of the coil.

Although exemplary embodiments employing a flat ferrite structure were described above, it will be apparent to those skilled in the art that an embodiment in which a ferrite core is formed at the center of the coil is also within the scope of the present disclosure.

FIG. 8 is a flowchart conceptually illustrating a wireless power transfer method according to an exemplary embodiment of the present disclosure. The wireless power transfer method shown in FIG. 8 may correspond to the embodiments shown in FIGS. 1-7.

Referring to FIG. 8, the wireless power transfer method according to an exemplary embodiment of the present disclosure is a method of wirelessly transferring electric power from the transmission pad 21 including the primary coil to the reception pad 11 including the secondary coil.

The wireless power transfer method according to an exemplary embodiment of the present disclosure may include: an operation S600 of providing three phase primary coils each of which includes a first coil element associated with a corresponding phase and arranged to surround a first space and a second coil element associated with the corresponding phase and arranged to surround a second space adjacent to the first space, an operation S800 of positioning the common center point of the secondary phase coils within a predetermined offset range from the common center point of the primary phase coils; and an operation S900 of supplying three-phase input voltages to the three phase primary coils and allowing to be wirelessly transferred to the three phase secondary coils. In the operation S600 of providing the three phase primary coils, the first coil element and the second coil element in each of the three phase primary coils are connected to the same power source. In addition, the first coil element and the second coil element may be branched at a branch point, and the first coil element may be arranged to surround the first space and the second coil element may be arranged to surround the second space.

In the operation S600 of providing the three phase primary coils, the first coil element and the second coil element in each of the three phase primary coils may be connected to the same power source through a common port.

In the operation S600 of providing the three phase primary coils, the first coil element and the second coil element in each of the three phase primary coils may share the common feeding line section between the first space and the second space and be arranged symmetrically with respect to the common feed line section.

In the operation S600 of providing the three phase primary coils, the first magnetic field formed in the first space may be in an opposite direction to the second magnetic field formed in the second space in each of the three phase primary coils.

The wireless power transfer method according to an exemplary embodiment of the present disclosure may further include an operation S700 of providing three phase secondary coils. The three phase secondary coils may have the same structure as the three phase primary coils. The structure of the primary coils and the secondary coils may correspond to the coils shown in FIGS. 6 and 7.

The features applicable to the operation S600 may also be applicable to the operation S700. The wireless power transfer system according to an exemplary embodiment of the present disclosure may exhibit an optimal efficiency when all the phase coils in the primary side and the secondary side have the same coil structure as that shown in FIGS. 6 and 7.

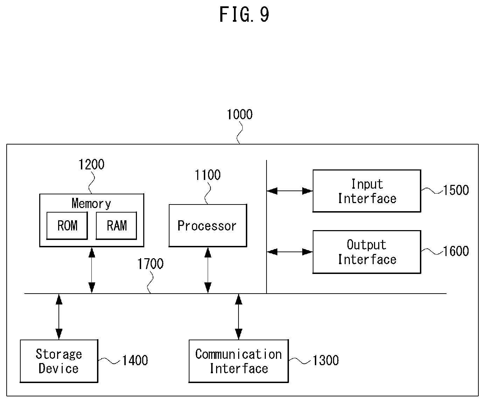

FIG. 9 is a block diagram illustrating a generalized configuration of hardware included in the wireless power transmission pad and/or the wireless power reception pad or associated with the wireless power transmission pad and/or the wireless power reception pad to control a sequence for the wireless power transfer.

For convenience of explanation, the hardware controlling the sequence for the wireless power transfer may be referred to as a controller 1000.

The controller 1000 may be disposed on a side of the electric vehicle 100, on a side of the electric vehicle supply equipment (EVSE), or on a side of the power transmission pad 21.

The controller 1000 may include at least one processor 1100, a memory 1200 storing at least one instruction for performing the operations described above through the processor 1100, and a communication interface 1300 connected to a network to perform communications. The controller 1000 for wireless power transfer may further include a storage device 1400 capable of storing the at least one instruction for performing the operations described above or data generated during the execution of the instruction. The controller 1000 for wireless power transfer may further include an input interface 1500 and an output interface 1600 for interactions with a user. The components of the controller 1000 for wireless power transfer may be connected to each other by a system bus 1700 to communicate with each other.

The controller or computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Here, the at least one instruction may include at least one of: a sequence suitable for identifying at least one of the electric vehicle 10, the electric vehicle supply equipment (EVSE) 20, and the power transmission pad 21, a sequence suitable for associating two or more devices among the electric vehicle 10, the electric vehicle supply equipment (EVSE) 20, the power transmission pad 21 through wireless communications, a sequence suitable for performing the alignment and/or the pairing through a positioning of a counterpart device, and a sequence suitable for allowing to supply an alternating current power for the power transfer after the alignment and/or the pairing.

Additionally, the controller 1000 may include the communication interface 1300 that performs communications through a wireless communication network.

Additionally, the controller 1000 may further include the storage device 1400, the input interface 1500, and the output interface 1600.

The components of the controller 1000 may be connected to each other by the system bus 1700 to communicate with each other.

The controller 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA). The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

**INDUSTRIAL APPLICABILITY**

According to an exemplary embodiment of the present disclosure, a wireless power transfer (WPT) device and system with a high power transfer efficiency may be implemented by optimizing the arrangement of the novel coil structure.

**Claims**

1. A coil structure provided for three-phase wireless power transfer (WPT), comprising:

    a first phase coil corresponding to a first phase,
    wherein the first phase coil comprises:

        a first coil element corresponding to the first phase and arranged to surround a first space; and

a second coil element corresponding to the first phase and arranged to surround a second space adjacent to the first space,
wherein the first coil element and the second coil element are connected to a same power source,
wherein the first coil element and the second coil element are branched at a branch point, and the first coil element is arranged to surround the first space and the second coil element is arranged to surround the second space.

2.  The coil structure as claimed in claim 1, further comprising:

    a second phase coil corresponding to a second phase; and
    a third phase coil corresponding to a third phase,
    wherein the first phase coil, the second phase coil, and the third phase coil are disposed to share a center point and to have angular differences of 120 degrees from each other.

3.  The coil structure as claimed in claim 2, wherein the second phase coil comprises two coil elements corresponding to the second phase and arranged to surround respective spaces adjacent to each other,
    wherein the third phase coil includes two coil elements corresponding to the third phase, each of which is arranged to surround respective spaces adjacent to each other.

4.  The coil structure as claimed in claim 1, wherein the first coil element and the second coil element are connected to a same power source through a common port.

5.  The coil structure as claimed in claim 1, wherein the first coil element and the second coil element share a common feeding line section between the first space and the second space.

6.  The coil structure as claimed in claim 5, wherein the first coil element and the second coil element are arranged symmetrically with respect to the common feed line section.

7.  The coil structure as claimed in claim 1, wherein a first magnetic field formed in the first space is in an opposite direction to a second magnetic field formed in the second space.

8.  A three-phase wireless power transfer device provided to wirelessly transfer three-phase power to a reception pad including a secondary coil, comprising:

    a first phase coil corresponding to a first phase;
    a second phase coil corresponding to a second phase;
    a third phase coil corresponding to a third phase, and
    a power supply circuit configured to supply power to the first phase coil, the second phase coil, and the third phase coil,
    wherein each of the first phase coil, the second phase coil, and the third phase coil comprises:

        a first coil element corresponding to a respective phase and arranged to surround a first space; and
        a second coil element corresponding to the respective phase and arranged to surround a second space adjacent to the first space,
        wherein, in each of the first phase coil, the second phase coil, and the third phase coil, the first coil element and the second coil element are connected to a same power source,
        wherein, in each of the first phase coil, the second phase coil, and the third phase coil, the first coil element and the second coil element are branched at a branch point, and the first coil element is arranged to surround the first space and the second coil element is arranged to surround the second space.

9.  The three-phase wireless power transfer device as claimed in claim 8, wherein the first phase coil, the second phase coil, and the third phase coil are disposed to share a center point and to have angular differences of 120 degrees from each other.

10. The three-phase wireless power transfer device as claimed in claim 8, wherein, in each of the first phase coil, the second phase coil, and the third phase coil, the first coil element and the second coil element are connected to a same power source through a common port.

11. The three-phase wireless power transfer device as claimed in claim 8, wherein, in each of the first phase coil, the second phase coil, and the third phase coil, the first coil element and the second coil element share a common feeding line section between the first space and the second space and are arranged symmetrically with respect to the common feed line section.

12. The three-phase wireless power transfer device as claimed in claim 8, wherein, in each of the first phase coil, the second phase coil, and the third phase coil, a first magnetic field formed in the first space is in an opposite direction to a second magnetic field formed in the second space.

13. A method of wirelessly transferring power from a transmission pad comprising three phase primary coils to a reception pad comprising three phase secondary coils, the method comprising:

   providing the three phase primary coils, each comprising a first coil element associated with a corresponding phase and arranged to surround a first space and a second coil element associated with the corresponding phase and arranged to surround a second space adjacent to the first space, respectively;
   positioning a common center point of the three phase secondary coils within a predetermined offset range from a common center point of the three phase primary coils; and
   supplying three-phase input power to the three phase primary coils and allowing to be wirelessly transferred to the three phase secondary coils.

14. The method of claim 13, wherein, in providing the three phase primary coils, the first coil element and the second coil element in each of the three phase primary coils are connected to a same power source,
   wherein the first coil element and the second coil element are branched at a branch point, and the first coil element is arranged to surround the first space and the second coil element is arranged to surround the second space.

15. The method of claim 13, wherein, in providing the three phase primary coils, the first coil element and the second coil element in each of the three phase primary coils are connected to a same power source through a common port.

16. The method of claim 13, wherein, in providing the three phase primary coils, the first coil element and the second coil element in each of the three phase primary coils share a common feeding line section between the first space and the second space and are arranged symmetrically with respect to the common feed line section.

17. The method of claim 13, wherein, in providing the three phase primary coils, a first magnetic field formed in the first space is in an opposite direction to a second magnetic field formed in the second space in each of the three phase primary coils.

FIG. 1

EP 4 576 495 A1

# FIG. 2

FIG. 3

FIG. 4

FIG. 5

210A        220A        110A

| Single Phase AC-DC Rectifier | SPWM Inverter | | Rectifier |

210B        220B        110B        120

| Single Phase AC-DC Rectifier | SPWM Inverter | | Rectifier | | Charger |

210C        220C        110C

| Single Phase AC-DC Rectifier | SPWM Inverter | | Rectifier |

FIG. 6

FIG. 7

360

I/2  I/2

345—⊙ H̅   H̅ ⊗—355

↑ I

I/2  I/2

320  330

FIG. 8

| Provide power transmission pad including primary coil | S600 |

↓

| Provide power reception pad including secondary coil | S700 |

↓

| Position center of secondary coil such that distance between center of primary coil and center of secondary coil is within predetermined offset range | S800 |

↓

| Supply input power to primary coil to allow wireless power transfer to secondary coil | S900 |

FIG. 9

1000

1200

Memory

| ROM | RAM |

1100

Processor

Input
Interface —1500

Output
Interface —1600

1700

Storage
Device —1400

Communication
Interface —1300

## INTERNATIONAL SEARCH REPORT

| International application No. |
|---|
| **PCT/KR2023/013218** |

### A. CLASSIFICATION OF SUBJECT MATTER

**H02J 50/00**(2016.01)i; **B60L 53/12**(2019.01)i; **H02J 50/12**(2016.01)i; **H01F 38/14**(2006.01)i

According to International Patent Classification (IPC) or to both national classification and IPC

### B. FIELDS SEARCHED

Minimum documentation searched (classification system followed by classification symbols)

H02J 50/00(2016.01); B60L 11/18(2006.01); B60L 53/12(2019.01); H01F 38/14(2006.01); H02J 5/00(2006.01); H02J 50/10(2016.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선 전력(wireless power), 코일(coil), 3상(three phase), 배열(array)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0079884 A (KOREA ADVANCED INSTITUTE OF SCIENCE AND TECHNOLOGY et al.) 30 June 2021 (2021-06-30)<br>See paragraphs [0094]-[0106], claims 1-12, and figures 5-7. | 1-17 |
| A | KR 10-2019-0091804 A (LSIS CO., LTD.) 07 August 2019 (2019-08-07)<br>See paragraphs [0038]-[0060], claims 1-10, and figures 2-4. | 1-17 |
| A | WO 2016-207291 A1 (BOMBARDIER PRIMOVE GMBH) 29 December 2016 (2016-12-29)<br>See pages 38-39, and figures 2-3. | 1-17 |
| A | KR 10-2021-0011238 A (LG ELECTRONICS INC.) 01 February 2021 (2021-02-01)<br>See paragraphs [0104]-[0146], and figures 4a-6. | 1-17 |
| A | KR 10-2017-0053966 A (KOREA ADVANCED INSTITUTE OF SCIENCE AND TECHNOLOGY) 17 May 2017 (2017-05-17)<br>See paragraphs [0043]-[0070], and figures 1-2. | 1-17 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 January 2024** | **02 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013218**

| Patent document cited in search report | | | Publication date (day/month/year) | Patent family member(s) | | | Publication date (day/month/year) |
|---|---|---|---|---|---|---|---|
| KR | 10-2021-0079884 | A | 30 June 2021 | KR | 10-2397861 | B1 | 13 May 2022 |
| KR | 10-2019-0091804 | A | 07 August 2019 | None | | | |
| WO | 2016-207291 | A1 | 29 December 2016 | BR | 112017027844 | A2 | 04 September 2018 |
| | | | | CA | 2990736 | A1 | 29 December 2016 |
| | | | | CA | 2990741 | A1 | 29 December 2016 |
| | | | | CN | 107710357 | A | 16 February 2018 |
| | | | | CN | 107710357 | B | 10 March 2020 |
| | | | | CN | 107710358 | A | 16 February 2018 |
| | | | | CN | 107710358 | B | 13 March 2020 |
| | | | | EP | 3314620 | A1 | 02 May 2018 |
| | | | | EP | 3314620 | B1 | 27 May 2020 |
| | | | | EP | 3314621 | A1 | 02 May 2018 |
| | | | | EP | 3314621 | B1 | 13 March 2019 |
| | | | | EP | 3474302 | A2 | 24 April 2019 |
| | | | | EP | 3474302 | A3 | 01 May 2019 |
| | | | | EP | 3474302 | B1 | 05 April 2023 |
| | | | | GB | 2539885 | A | 04 January 2017 |
| | | | | HK | 1248918 | A1 | 19 October 2018 |
| | | | | HK | 1248919 | B | 15 November 2019 |
| | | | | JP | 2018-527738 | A | 20 September 2018 |
| | | | | JP | 2018-527739 | A | 20 September 2018 |
| | | | | JP | 6615914 | B2 | 04 December 2019 |
| | | | | KR | 10-2018-0040525 | A | 20 April 2018 |
| | | | | KR | 10-2018-0040526 | A | 20 April 2018 |
| | | | | RU | 2018102979 | A | 26 July 2019 |
| | | | | US | 10510482 | B2 | 17 December 2019 |
| | | | | US | 11031178 | B2 | 08 June 2021 |
| | | | | US | 11348724 | B2 | 31 May 2022 |
| | | | | US | 2018-0190426 | A1 | 05 July 2018 |
| | | | | US | 2018-0204675 | A1 | 19 July 2018 |
| | | | | US | 2020-0365317 | A1 | 19 November 2020 |
| | | | | US | 2021-0166868 | A1 | 03 June 2021 |
| | | | | WO | 2016-207290 | A1 | 29 December 2016 |
| KR | 10-2021-0011238 | A | 01 February 2021 | None | | | |
| KR | 10-2017-0053966 | A | 17 May 2017 | KR | 10-1860428 | B1 | 24 May 2018 |

Form PCT/ISA/210 (patent family annex) (July 2022)